# EUROPÄISCHE PATENTANMELDUNG

(11) **EP 1 252 951 A1**
(43) Veröffentlichungstag der Anmeldung: **30.10.2002**
(21) Anmeldenummer: 02009114.6
(22) Anmeldetag: 24.04.2002
(51) Int. Cl.: B22D 25/04, B22C 9/06

(54) **Gittergiessform zur Herstellung von Dachgitterelementen für Bleiakkumulatoren**

(30) Priorität: 28.04.2001 DE 20107375 U
(71) Anmelder: Hoppecke Batterien GmbH & Co. KG, 59929 Brilon (DE)
(72) Erfinder: Günter Betten, 59602 Rüthen (DE)
(74) Vertreter: Stenger, Watzke & Ring Patentanwälte

(57) **Zusammenfassung**

Die Erfindung betrifft eine Gittergießform (1) zur Herstellung von Dachgitterelementen für Bleiakkumulatoren, bestehend aus einer ersten Gießformhälfte (2) und einer zu dieser relativ bewegbar angeordneten zweiten Gießformhälfte (3), wobei die Flächen (4,5) der einander zugewandten Seiten der beiden Gießformhälften korrespondierend zueinander ausgebildet sind und ein der späteren Form des Dachgitterelements entsprechendes Gießprofil (7,8) aufweisen.

Der Erfindung liegt die Aufgabe zugrunde, eine Gittergießform zur Herstellung von Dachgitterelementen für Bleiakkumulatoren dahingehend weiterzubilden, daß bei gleichzeitiger Kostenreduzierung für die Herstellung der Gittergießform bzw. Gießformhälften eine vereinfachte Handhabung ermöglicht ist.

Die Lösung dieser Aufgabe durch die Erfindung ist gekennzeichnet durch eine sich planparallel zwischen der ersten und der zweiten Gießformhälfte erstreckende Trennebene (6).

## Beschreibung

Die Erfindung betrifft eine Gittergießform zur Herstellung von Dachgitterelementen für Bleiakkumulatoren, bestehend aus einer ersten Gießformhälfte und einer zu dieser relativ bewegbar angeordneten zweiten Gießformhälfte, wobei die Flächen der einander zugewandten Seiten der beiden Gießformhälften korrespondierend zueinander ausgebildet sind und ein der späteren Form des Dachgitterelements entsprechendes Gießprofil aufweisen.

Akkumulatoren sind aus dem Stand der Technik bekannt. Sie bestehen in der Regel aus einem Gehäuse, wenigstens zwei innerhalb des Gehäuses angeordneten, chemisch unterschiedlichen Elektroden sowie einem Deckel zum Verschließen des Gehäuses. Umgeben werden die Elektroden von einem zu meist flüssigen oder eingedickten Elektrolyten.

Bei Bleiakkumulatoren bestehen die Elektroden aus Blei und sind nach Art eines flächenhaften Gitterelements gitterförmig ausgebildet. Die einzelnen Netzgitter oder Maschen des Gitterelements sind auf der positiven Seite der späteren Elektrode mit Bleidioxid und auf der negativen Seite mit Bleischlamm gefüllt. Als Elektrolyt wird in der Regel Schwefelsäure verwendet.

Die zur Ausbildung der Elektroden verwendeten Gitterelemente werden im allgemeinen mittels Gießen hergestellt. Dabei werden zwei korrespondierend zueinander ausgebildete Gießformhälften verwendet, welche auf ihrer jeweiligen formgebenden Seite mit einem der späteren Form des Gitterelements entsprechenden Gießprofil versehen sind. Zwei zu einer Gittergießform zusammengesetzte Gießformhälften bilden sodann einen der Negativform des auszubildenden Gitterelements entsprechenden Formenhohlraum aus, der zur Herstellung des Gitterelements mit Schmelzgut zu füllen ist. Derlei Verfahren sowie die zur Durchführung des Verfahrens notwendigen Gittergießformen sind aus dem Stand der Technik in vielerlei Ausgestaltung bekannt. So zum Beispiel aus der DE 23 55 650, der DE 35 33 581 A1, der EP 0 174 613 A1 oder der EP 0 581 170 A1.

Prinzipiell können hinsichtlich der geometrischen Ausgestaltung der Seitenflächen der Gitterelemente zwei Gitterelementtypen voneinander unterschieden werden: zum einen die bei herkömmlichen Gitterelementen vorgesehene ebene Ausgestaltung, zum anderen die nicht ebene, vorzugsweise wellenförmige Ausgestaltung. Gitterelemente mit wellenförmig ausgebildeten Seitenflächen werden als sogenannte Dachgitterelemente bezeichnet und zeichnen sich insbesondere durch ein gegenüber herkömmlichen Gitterelementen verbessertes Pastierverhalten sowie eine bessere Massehaftung und Eigenstabilität aus.

Die zur Ausbildung von Dachgitterelementen erforderlichen Gittergießformen bzw. Gießformhälften sind allerdings in nachteiliger Weise aufgrund ihrer komplizierten Formgestaltung nur mit sehr großem Aufwand, insbesondere hinsichtlich einer Formtrennung im Anschluß an einen erfolgten Gießvorgang, handhabbar und zudem äußerte kostenaufwendig in der Herstellung.

Der Erfindung liegt daher die **Aufgabe** zugrunde, eine Gittergießform zur Herstellung von Dachgitterelementen für Bleiakkumulatoren dahingehend weiterzubilden, daß bei gleichzeitiger Kostenreduzierung für die Herstellung der Gittergießform bzw. Gießformhälften eine vereinfachte Handhabung ermöglicht ist.

Die **Lösung** dieser Aufgabe durch die Erfingung ist gekennzeichnet durch eine sich planparallel zwischen der ersten und der zweiten Gießformhälfte erstreckende Trennebene.

Bei herkömmlichen Dachgittergießformen verläuft die Trennebene zwischen den beiden Gießformhälften entsprechend der geforderten wellenförmigen Ausgestaltung der Seitenflächen des Dachgitterelements gleichfalls in Form einer Welle. Anders verhält sich dies bei der erfindungsgemäßen Gittergießform. Wie auch bei Gittergießformen zur Ausbildung herkömmlicher Gitterelemente, d.h. Gitterelemente mit eben ausgebildeten Seitenflächen, verläuft die Trennebene bei der erfindungsgemäßen Gittergießform planparallel. Gleichwohl können mit der erfindungsgemäßen Gittergießform Dachgitterelemente mit wellenförmig ausgebildeter Netzstruktur hergestellt werden.

In vorteilhafter Weise ermöglicht die erfindungsgemäße Ausgestaltung eine vereinfachte Handhabung, da aufgrund des Umstands, daß die beiden Gießformhälften entlang einer planparallelen und nicht wellenförmigen Trennebene aneinander stoßen, eine sehr viel einfachere Formtrennung der beiden Gießformhälften im Anschluß an einen erfolgten Gießvorgang möglich ist, als dies bei den bekannten Dachgittergießformen der Fall ist. Zudem sind die Gießformhälften gemäß der Erfindung wesentlich preisgünstiger in der Herstellung. Insgesamt wird mit der Erfindung somit ein Gittergießformenkonzept vorgeschlagen, das die Ausbildung der gegenüber herkömmlichen Gitterelementen hinsichtlich Pastierverhalten und Massehaftung verbesserten Dachgitterelemente ermöglicht, das aber gleichwohl trotz der geforderten Wellenförmigkeit der Seitenflächen der mittels der Gittergießform zu erzeugenden Dachgitterelemente im Unterschied zu bekannten Dachgittergießformen eine einfachere Formtrennung sowie geringere Herstellkosten ermöglicht.

Die Gießformhälften bestehen bevorzugter Maßen aus Metall bzw. Kokillenguß-Material, wobei die jeweiligen Innenflächen der Gießformhälften mit einem Trennmaterial versehen sind. Das Trennmittel stellt dabei zum einen sicher, daß das in die Gittergießform eingebrachte Schmelzgut gegenüber dem gut wärmeleitenden Material der Gießformhälften thermisch isoliert ist, so daß ein frühzeitiges Erstarren verhindert ist, zum anderen ermöglicht das Trennmaterial eine leichte und frei von etwaigen Rückständen bleibende Entformung des nach einem Erstarren verfestigten Dachgitterelements. Als Trennmaterial eignet sich dabei insbesondere ein keramischer Werkstoff, der bei gleichbleibender Formbeständigkeit eine Erhöhung der Standzeiten ermöglicht. Zudem erlaubt die Verwendung keramischer Werkstoffe eine geometrisch exakte und mit nur geringen Toleranzen behaftete Ausbildung der Dachgitterelemente.

Einerseits ist der Durchlaßquerschnitt der Fließkanäle der Gittergießform bzw. der Gießformhälften derart groß vorzugeben, daß in die Gittergießform eingebrachtes Schmelzgut zügig abfließen kann und es nicht zu einer Erstarrung kommt, bevor nicht der gesamte Formenhohlraum vollständig mit Schmelzgut gefüllt ist, anderseits ist der durch die Größe des Durchlaßquerschnittes bedingte Fließkanalumfang zu minimieren, damit der Kontaktbereich des heißen Schmelzgutes mit der den Fleißkanal definierenden kalten Wandung auf eine Minimum reduziert werden kann. In diesem Zusammenhang wird gemäß einer besonderen Ausgestaltungsform der Erfindung vorgeschlagen, daß die sich innerhalb einer Gießformhälfte parallel zur Trennebene erstreckenden Fließkanäle zur Ausbildung der Querstege des späteren Dachgitterelements in bezug auf die Trennebene unsymmetrisch ausgebildet sind. Vorzugsweise weist der Durchflußquerschnitt der Fließkanäle dabei die Form eines unregelmäßigen Sechsecks auf.

Aus Gründen der Stabilität und zur Ausprägung einer einheitlichen Massenverteilung wird mit der Erfindung zudem vorgeschlagen, Fließkanäle mit unterschiedlichen Durchflußquerschnitten in bezug auf eine in der Trennebene liegende Längsrichtung abwechselnd hintereinander anzuordnen.

Weitere Merkmale und Vorteile der Erfindung ergeben sich aus der nachfolgenden Beschreibung anhand der Figuren. Dabei zeigen:
- Figur 1:: in einer schematischen Schnittdarstellung eine Gittergießform zur Herstellung von Dachgitterelementen gemäß dem Stand der Technik;
- Figur 2:: in einer schematischen Schnittdarstellung eine Gittergießform zur Herstellung von Dachgitterelementen gemäß der Erfindung und
- Figur 3:: eine besondere Ausgestaltungsform der erfindungsgemäßen Gittergießform nach Figur 2.

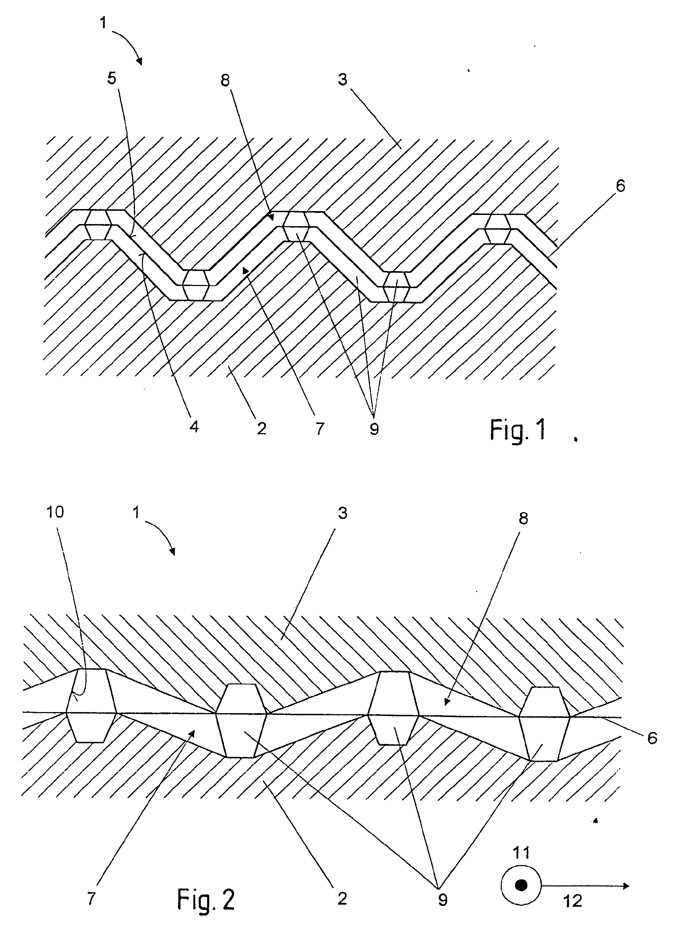

Figur 1 zeigt eine aus dem Stand der Technik bekannte Gittergießform 1 zur Ausbildung von Dachgitterelementen für Bleiakkumulatoren. Die Gittergießform 1 besteht aus zwei relativ zueinander bewegbar angeordneten Gießformhälften 2 und 3, wobei die erste Gießformhälfte 2 vorzugsweise ortsfest und die zweite Gießformhälfte 3 relativ zur ersten Gießformhälfte 2 verfahrbar angeordnet ist. Die Flächen 4 und 5 der einander zugewandten Seiten der beiden Gießformhälften 2 und 3 sind korrespondierend zueinander jeweils wellenförmig ausgebildet und weisen ein der späteren Form des Dachgitterelements entsprechendes Gießprofil 7 bzw. 8 auf, welches durch die Fließkanäle 9 gebildet ist.

Die beiden Gießformhälften 2 und 3 stoßen entlang der Trennebene 6 aneinander. Entsprechend der wellenförmigen Ausgestaltung der Flächen 4 und 5 der einander zugewandten Seiten der beiden Gießformhälften 2 und 3 erstreckt sich auch die Trennebene 6 wellenförmig.

Figur 2 zeigt eine Dachgittergießform gemäß der Erfindung. Deutlich ist hier zu erkennen, daß sich die erfindungsgemäße Gittergießform 1 im Unterschied zum Stand der Technik durch eine sich planparallel zwischen der ersten und der zweiten Gießformhälfte 2 und 3 erstreckende Trennebene 6 auszeichnet. Dabei sind die beiden Gießformhälfte 2 und 3 derart ausgebildet, daß obgleich sie planparallel auf einander stoßen, das Gießprofil 7 bzw. 8 trotzdem eine sich in Längsrichtung 12 erstreckende Wellenform zur Ausbildung gattungsgemäßer Dachgitterelemente aufweist. Die sich innerhalb einer Gießformhälfte 2 oder 3 in Querrichtung 11 parallel zur Trennebene 6 erstreckenden Fließkanäle 9 zur Ausbildung der Querstege des späteren Dachgitterelements sind in bezug auf die Trennebene 6 unsymmetrisch ausgebildet und weisen eine Durchlaßquerschnitt 10 in Form eines unregelmäßigen Sechsecks auf.

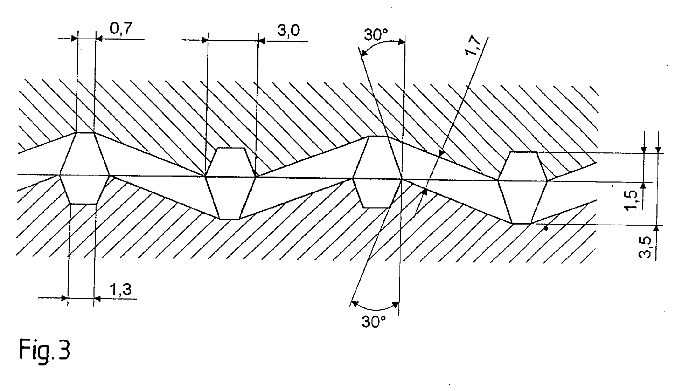

Figur 3 zeigt eine besondere Ausgestaltungsform der erfindungsgemäßen Gittergießform nach Figur 2, wobei hinsichtlich der wesentlichen geometrischen Größen Zahlenwerte angegeben sind. Die Darstellung ist nicht maßstabsgetreu und die aufgeführten Zahlenwerte sind ausschließlich beispielhaft zu verstehen und können je nach Anwendungsfall selbstverständlich variiert werden.

### Bezugszeichenliste

- 1: Gittergießform
- 2: erste Gießformhälfte
- 3: zweite Gießformhälfte
- 4: Fläche
- 5: Fläche
- 6: Trennebene
- 7: Gießprofil
- 8: Gießprofil
- 9: Fließkanal
- 10: Durchlaßquerschnitt
- 11: Querrichtung
- 12: Längsrichtung

## Patentansprüche

1. Gittergießform zur Herstellung von Dachgitterelementen für Bleiakkumulatoren, bestehend aus einer ersten Gießformhälfte und einer zu dieser relativ bewegbar angeordneten zweiten Gießformhälfte, wobei die Flächen der einander zugewandten Seiten der beiden Gießformhälften korrespondierend zueinander ausgebildet sind und ein der späteren Form des Dachgitterelements entsprechendes Gießprofil aufweisen, **gekennzeichnet durch** eine sich planparallel zwischen der ersten und der zweiten Gießformhälfte erstreckende Trennebene.

2. Gittergießform nach Anspruch 1, **dadurch gekennzeichnet, daß** die Gießformhälften aus Metall bzw. Kokillenguß-Material bestehen, wobei die jeweiligen Innenflächen der Gießformhälften mit einem Trennmaterial versehen sind.

3. Gittergießform nach Anspruch 2, **dadurch gekennzeichnet, daß** als Trennmaterial ein keramischer Werkstoff vorgesehen ist.

4. Gittergießform nach einem der Ansprüche 1 bis 3, **dadurch gekennzeichnet, daß** die sich innerhalb einer Gießformhälfte parallel zur Trennebene erstreckenden Fließkanäle zur Ausbildung der Querstege des späteren Dachgitterelements in bezug auf die Trennebene unsymmetrisch ausgebildet sind.

5. Gittergießform nach Anspruch 4, **dadurch gekennzeichnet, daß** der Durchflußquerschnitt der Fließkanäle die Form eines unregelmäßigen Sechsecks aufweist.

6. Gittergießform nach Anspruch 5, **dadurch gekennzeichnet, daß** Fließkanäle mit unterschiedlichen Durchflußquerschnitten in bezug auf eine in der Trennebene liegende Längsrichtung abwechselnd hintereinander angeordnet sind.
